## Europäisches Patentamt
## European Patent Office
## Office européen des brevets

(19)

(11) Numéro de publication: **0 134 746**
**B1**

(12) # FASCICULE DE BREVET EUROPÉEN

(45) Date de publication du fascicule du brevet:
**12.08.87**

(51) Int. Cl.⁴: **F 16 H 27/02**

(21) Numéro de dépôt: **84450021.5**

(22) Date de dépôt: **10.09.84**

(54) **Dispositif d'entraînement par transformation d'un mouvement linéaire alternatif en mouvement rotatif.**

(30) Priorité: **09.09.83 FR 8314573**

(43) Date de publication de la demande:
**20.03.85 Bulletin 85/12**

(45) Mention de la délivrance du brevet:
**12.08.87 Bulletin 87/33**

(84) Etats contractants désignés:
**AT BE CH DE GB IT LI LU NL SE**

(56) Documents cité:
**FR-A-679 008**
**FR-A-754 534**
**FR-A-756 886**
**FR-A-1 032 829**

**IBM TECHNICAL DISCLOSURE BULLETIN, vol. 8,
no. 12, mai 1966, page 1832, New York, USA; R.
EICHELSHEIM: "Incrementing drive"
HYDRAULIC PNEUMATIC POWER, vol. 21, V78, no.
250, octobre 1975, page 369; "New pneumatic belt
conveyor uses less air"**

(73) Titulaire: **Gillet, Marcel, Calonge, F-47440
Casseneuil (FR)**

(72) Inventeur: **Gillet, Marcel, Calonge, F-47440
Casseneuil (FR)**

(74) Mandataire: **Thébault, Jean- Louis, Cabinet Jean-
Louis Thébault 50, Cours de Verdun, F-33000
Bordeaux (FR)**

EP 0 134 746 B1

## Description

La présente invention a trait à un dispositif d'entraînement par transformation d'un mouvement linéaire alternatif en mouvement continu.

On connaît déjà divers dispositifs de ce type parmi lesquels on peut citer le dispositif à bielle interposée entre une pièce mobile à va-et-vient suivant une trajectoire linéaire alternative et une roue, ce type de mécanisme étant utilisé, par exemple, pour l'entraînement des roues d'une locomotive.

On peut citer, également, l'entraînement d'une roue à cliquet par l'intermédiaire d'une chaîne dont l'extrémité tractrice se déplace suivant une trajectoire linéaire alternative: c'est le genre de dispositif entraînant, en particulier, les véhicules appelés "patinettes" ou "cyclorameurs".

Le document FR-A-756.886 décrit un dispositif du genre ci-dessus, à roues libres, destiné à entraîner un arbre à partir de chaînes commandées par des organes animés de mouvements rectilignes de va-et-vient. Un tel dispositif présente les inconvénients des dispositifs à roue libre, à savoir, le coût, la fragilité et la limitation du couple susceptible d'être transmis.

On connaît, enfin, d'autres dispositifs à cames et roue libre, à friction, qui sont tous complexes et ne permettent, pas plus que les autres systèmes rappelés ci-dessus, de transmettre économiquement des efforts importants à faible vitesse et de réguler de façon simple la vitesse du mouvement rotatif en continu, ou son amplitude et sa fréquence en mouvement discontinu.

Le but de la présente invention est de pallier ces divers inconvénients en proposant un moyen simple et robuste capable de transformer un mouvement linéaire alternatif en mouvement rotatif discontinu ou continu, en transmettant des efforts importants et susceptible de se prêter à une régulation aisée de la vitesse de rotation en mouvement rotatif ou de l'amplitude et de la fréquence du mouvement rotatif discontinu.

A cet effet, l'invention a pour objet un dispositif d'entraînement par transformation d'un mouvement linéaire en mouvement rotatif, caractérisé en ce qu'il comprend une roue dentée solidaire d'un axe à entraîner en rotation et montée tourillonnante dans un palier porté par un bâti, une chaîne ou courroie, ou similaire, passant sur ladite roue et fixée, à une extrémité, à un organe moteur mobile à va-et-vient suivant une trajectoire rectiligne le long d'un axe sensiblement tangent à la roue dentée et, à l'autre extrémité, à un moyen de rappel automatique, les dents de la roue étant conformées de manière que dans le sens de rappel de la chaîne ou courroie, cette dernière "saute" sur lesdites dents sans les entraîner, alors que dans le sens inverse la chaîne ou courroie est en prise ferme avec les dents de la roue.

Suivant un mode de réalisation, ledit organe moteur est la tige d'un vérin fixé audit bâti, cependant que ledit moyen de rappel est un ressort hélicoïdal également fixé audit bâti.

Un tel dispositif est capable de transformer le mouvement alternatif du piston du vérin en un mouvement rotatif discontinu dudit axe à entraîner en transmettant des efforts qui peuvent être très importants, ceux-ci étant supportés sans aucun problème et avec une grande robustesse et sécurité par le couple chaîne-roue dentée.

Suivant une application particulièrement intéressante du dispositif de l'invention, on peut communiquer audit axe à entraîner une rotation non plus discontinue mais continue en juxtaposant au moins deux dispositifs selon l'invention c'est-à-dire en solidarisanten rotation chaque roue dentée du même axe à entraîner et en faisant fonctionner les vérins ou organes moteurs avec un certain décalage, en sorte qu'en fin du mouvement moteur de l'un des vérins le relais soit pris par l'autre vérin, ou le vérin suivant de façon à assurer la rotation continue dudit axe.

D'autres caractéristiques et avantages ressortiront de la description qui va suivre de modes de réalisation du dispositif de l'invention, description donnée à titre d'exemple uniquement et en regard des dessins annexés sur lesquels:

- Figure 1 représente une vue schématique d'un dispositif conforme à l'invention;

- Figure 2 représente une vue de dessus de deux dispositifs selon la revendication 1, jumelés sur un même axe à commander, et

Figure 3 illustre une variante de réalisation du dispositif de la Figure 1.

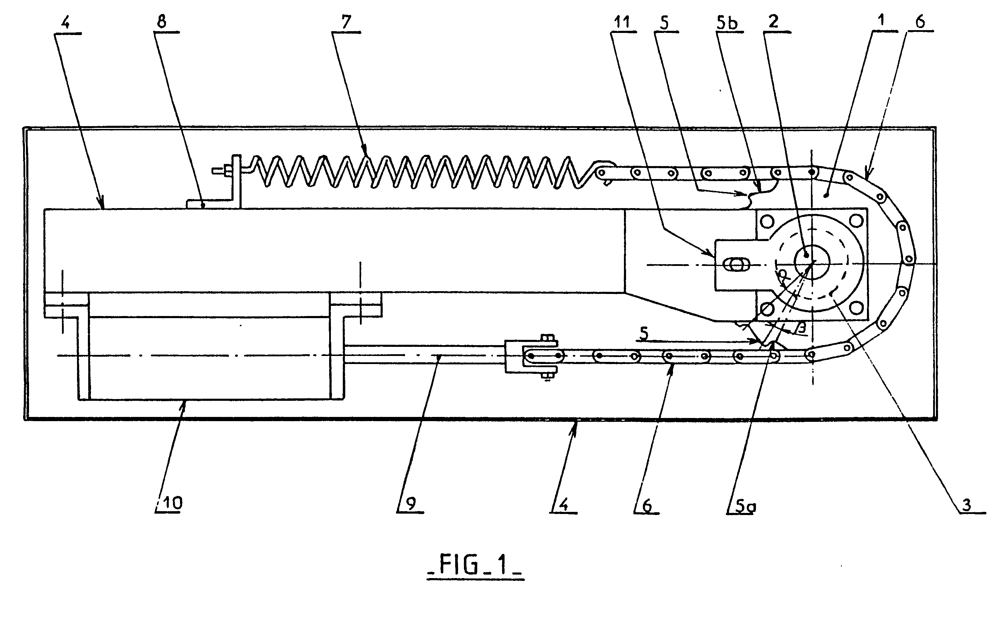

Le dispositif représenté sur la figure 1 comprend une roue dentée 1 clavetée sur un arbre ou axe 2 à entraîner en rotation et montée tourillonnante dans un palier 3 fixé sur un bâti 4.

Les dents 5 de la roue 1 ont un profil spécial qui sera décrit plus loin.

Sur la roue dentée 1 passe une chaîne 6 à maillons conventionnels, dont une extrémité est fixée à un ressort hélicoïdal 7 ancré à son autre extrémité sur une patte 8 solidaire du bâti 4 et dont l'autre extrémité est fixée à une tige 9 d'un vérin 10, hydraulique, pneumatique, électrique etc..., également fixé au bâti 4.

Les axes du ressort 7 et de la tige 9 sont sensiblement parallèles et tangents à la roue dentée 1.

Le dispositif comporte, en outre, facultativement, un anti-retour 11 pouvant être remplacé par un système à friction sur le flanc de la roue 1 ou sur l'arbre 2.

Les dents 5 de la roue 1 sont dissymétriques et comportent un flanc d'attaque 5a incurvé en correspondance avec la courbure des axes des maillons de la chaîne 6 afin d'engrener de manière sûre et stable avec lesdits axes lorsque la chaîne 6 est tractée par la tige 9.

Le flanc opposé 5b de chaque dent 5 est incliné suivant une pente s'étendant jusqu'au pied de la dent amont (suivant le sens d'entraînement de la roue 1 par la chaîne 6). Le flanc 5b s'étend sur un

secteur angulaire α beaucoup plus étandu que le secteur angulaire β (très étroit) sur lequel s'étend le flanc 5a de façon à avoir une pente aussi proche que possible d'une tangente à la roue 1.

Ainsi, lorsque la tige 9 a cessé sa traction et repart en extension, le ressort 7 tire sur la chaîne dont les axes vont sauter les dents 5 en remontant les flancs inclinés 5b sans entraîner en rotation en sens contraire la roue 1.

Le dispositif anti-retour 11 est utilisé quand l'inertie de l'appareil entraîné par l'arbre 2 est faible et ne suffit pas à compenser l'effort arrière exercé par le frottement de la chaîne 6 sur les dents 5.

Dès que la tige 9 est revenu à son point d'extension maximale et repart en sens inverse la chaine 6 à nouveau engrène avec les dents 5 et entraîne à nouveau la roue 1 dans le même sens que précédemment.

La roue 1a des dimensions adaptées à l'effort à transmettre; elle peut être double, triple, etc... par juxtaposition et clavetage sur un même arbre 2. Ce dernier est utilisable à chacune de ses extrémités pour transmettre le mouvement rotatif utile.

La chaîne 6 (par exemple une chaîne à rouleaux) a des caractéristiques de pas et de dimension en rapport avec la roue 1 et la puissance du mouvement à transmettre.

Le vérin 10 peut être constitué par tout autre système produisant un mouvement linéaire alternatif.

Le ressort à boudin 7 peut être remplacé par un tendeur élastique ou un vérin fonctionnant en opposition avec l'organe de traction 10, ou encore tout autre système permettant de maintenir la tension de la chaîne 6 et son rappel.

Le bâti 4 peut avoir les formes et dimensions nécessitées par le contexte dans lequel il est utilisé, en particulier il peut avoir une forme de platine ou de caisson.

La course de l'organe de traction 9, 10 peut être réglée par des butées, fins de course, systèmes électroniques ou optiques, ou tout autre moyen, de manière à avoir une amplitude plus ou moins grande du mouvement de rotation de la roue 1.

Le réglage de la fréquence du mouvement alternatif déterminant la vitesse totale en tours/minute de l'ensemble roue 1-arbre 2 peut être facilement obtenu par un système de minuterie commandant la fréquence des cycles aller et retour de la tige 9.

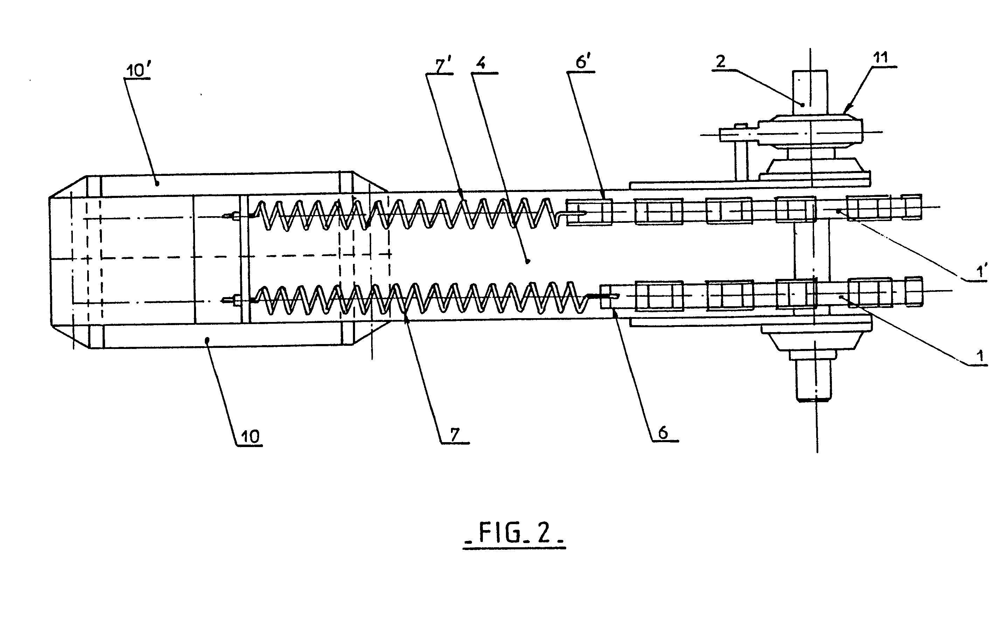

En juxtaposant deux dispositifs tels que celui de la figure 1 sur le même arbre 2, on peut (figure 2) communiquer un mouvement continu audit arbre.

Le dispositif représenté sur la fig. 2 comprend sur un même bâti 4, deux vérins 10,10' montés en parallèle et tractant deux chaînes 6,6' également montées en parallèle et coopérant avec deux routes dentées identiques 1,1' clavetées sur le même arbre 2.

Un décalage approprié dans la commande des tiges respectives des vérins 10 et 10' permet, lorsque la tige de l'un des vérins arrive en fin de rétraction, de faire prendre par l'autre tige de vérin le relais en entraînant à son tour en rotation l'arbre 2, lequel ne cesse donc pas de tourner, pendant ce temps la première tige revenant en extension et la chaîne associée sautant les dents de sa roue pour revenir à sa position initiale sous l'action du ressort de rappel.

Le dispositif selon l'invention permet en particulier de transmettre des efforts très importants, en particulier à vitesse lente, ce que ne pourraient pas supporter des systèmes fragiles du type roue à cliquet notamment.

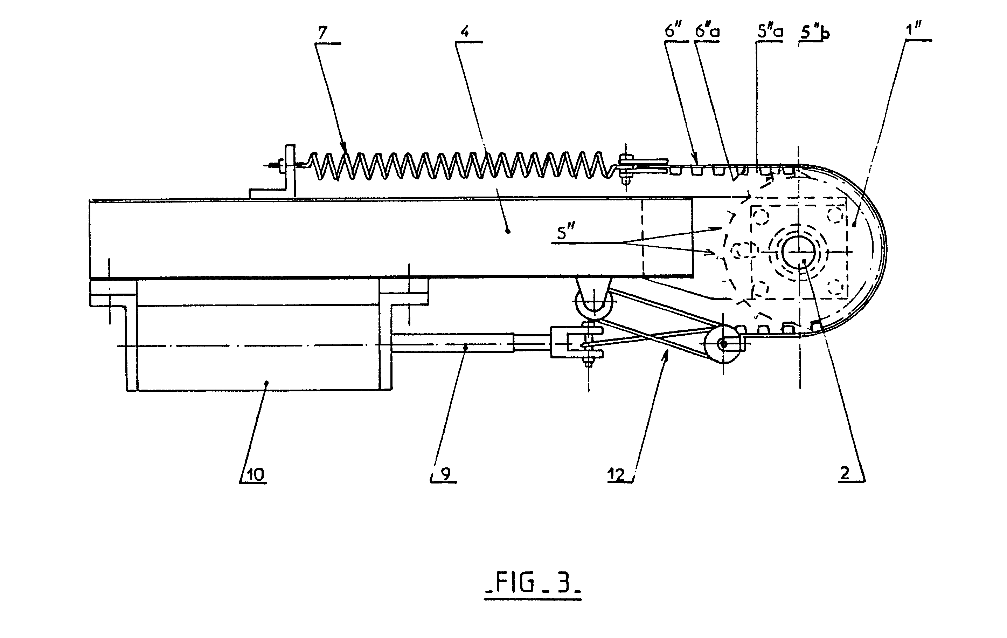

La figure 3 illustre une variante de réalisation suivant laquelle la roue dentée 1'' présente des dents 5'' de profil différent de celui de la figure 1 et adapté à une courroie crantée 6'' chargée de transmettre le mouvement de la tige 9 du vérin 10 à la roue 1''. A cet effet, les dents 5'' comportent un flanc d'engrènement 5''a relativement raide, proche d'un plan radial à la roue, cependant que le flanc opposé 5''b destiné à permettre à la courroie 6'' de sauter les dents au retour est nettement plus incliné pour permettre aux saillies ou crans 6''a de la courroie, de section trapezoïdale ou rectangulaire, de glisser et d'échapper aux dents 5''.

Le dispositif de la figure 3 comporte également un ensemble de mouflage 12 interposé entre l'extrémité de la courroie 6'' et l'extrémité de la tige 9 du vérin et destiné à multiplier par 2, 3, 4 etc... la puissance développée par l'organe de traction 9, 10. Cet ensemble 12, qui est facultatif, peut être bien entendu monté sur les dispositifs des figures 1 et 2.

Le dispositif de la figure 3 peut également comporter un dispositif anti-retour si l'inertie de l'ensemble entrainé par la roue 1'' et l'arbre 2 n'est pas suffisante pour empêcher le retour en arrière de la roue 1'' lors du retour à la position de départ de la courroie 6''.

Enfin, l'invention n'est évidemment pas limitée aux modes de réalisaîon représentés et décrits ci-dessus mais en couvre au contraire toutes les variantes, notamment en ce qui concerne les formes et dimensions des dents de la roue dentée (1, 1', 1'') et la nature des moyens de traction de la chaîne, courroie ou similaire (6, 6'') et des moyens (7) de rappel de cette dernière.

**Revendications**

1. Dispositif d'entraînement par transformation d'un mouvement linéaire en mouvement rotatif comprenant une roue dentée (1, 1', 1'') solidaire d'un axe ou arbre (2) à entraîner en rotation et montée tourillonnante dans un palier porté par un bâti (4), une chaîne ou courroie (6, 6''), ou similaire, passant sur ladite roue et fixée, à une extrémité, à un organe moteur (9, 10) mobile à va-et-vient suivant une trajectoire rectiligne le long d'un axe sensiblement tangent à la roue dentée et, à l'autre extrémité, à un moyen (7) de rappel automatique, caractérisé en ce que les dents (5, 5''a) de la roue sont conformées de manière que, dans le sens de rappel de la chaîne ou courroie, cette dernière "saute" sur lesdites dents sans les entraîner, alors que, dans le sens inverse, la chaîne ou courroie est en prise ferme avec les dents de la roue.

2. Dispositif suivant la revendication 1, caractérisé en ce que les dents de la roue dentée (1, 1', 1'') ont un profil dissymétrique, le flanc (5b, 5''b) d'échappement de la chaîne ou courroie (6) ayant une penté régulière proche d'une tangente à la roue et s'étendant sur un secteur angulaire (α) nettement supérieur à celui (β) du flanc d'engrènement (5a, 5''a).

3. Dispositif suivant la revendication 1 ou 2, caractérisé en ce que ledit organe moteur est un vérin (10) hydraulique, pneumatique ou électrique.

4. Dispositif suivant la revendication 1 à 3, caractérisé en ce ledit moyen de rappel est un ressort à boudins (7).

5. Dispositif suivant la revendication 3, caractérisé en ce que ledit moyen de rappel est un vérin fonctionnant en opposition avec ledit vérin (10) hydraulique, pneumatique ou électrique.

6. Dispositif suivant l'une des revendications 1 à 5, caractérisé en ce qu'un ensemble de mouflage (12) est interposé entre l'organe moteur (9,10) et l'extrémité correspondante de la chaîne ou courroie (6, 6' 6'').

7. Dispositif suivant l'une des revendications 1 à 6, caractérisé en ce qu'il est associé à un ou plusieurs autres dispositifs selon l'une desdites revendications, accouplés en parallèle au même arbre (2) et dont les organes moteurs respectifs (10, 10') sont actionnés avec un décalage dans le temps, en sorte qu'à la fin de la traction sur l'arbre (2) exercée par l'une des chaînes ou courroies (6, 6'), l'entraînement de l'arbre soit poursuivi sans arrêt par la traction exercée par l'autre, ou l'une des autres chaînes ou courroies.

8. Dispositif suivant l'une des revendications 1 à 7, caractérisé en ce qu'il comporte, en outre, un dispositif anti-retour (11) associé à la roue dentée (1, 1', 1'') ou à l'arbre mené (2).


**Patentansprüche**

1. Anordnung zum Antreiben mittels Umsetzung einer Linearbewegung in eine Drehbewegung, umfassend ein Zahnrad (1, 1', 1''), verbunden mit einer in Drehung zu versetzenden und in einem, von einem Rahmen (4) getragenen Lager drehgelagerten Welle oder Achse (2), eine um das Rad gelegte Kette oder Gurt (6, 6'') oder ähnliches, die mit einem Ende an einem Motororgan (9, 10), das längs einer geraden Bahn mit einer bezüglich des Zahnrads im wesentlichen tangential verlaufenden Achse hinundherbeweglich ist, und mit dem andern Ende an einem automatischen Rückstellmittel (7) festgelegt ist, dadurch gekennzeichnet, daß die Zähne (5, 5''a) des Rades derart ausgebildet sind, daß in Rückstellrichtung der Kette oder des Gurts letztere(r) die Zähne antriebslos "überspringt", während in umgekehrter Richtung die Kette oder der Gurt mit den Zähnen des Rades in sicherem Eingriff steht.

2. Anordnung nach Anspruch 1, dadurch gekennzeichnet, daß die Zähne des Zahnrads (1, 1', 1'') ein unsymmetrisches Profil haben, wobei die Auslaufflanken (5b, 5''b) bezüglich Kette bzw. Gurt (6) eine gleichmäßige, sich einer Tangente an das Rad nähernde Steigung besitzen und sich über einen Winkelbereich (α) erstrecken, der erheblich größer ist als derjenige (β) der Einlaufflanke (5a, 5''a).

3. Anordnung nach Anspruch 1 oder 2, dadurch gekennzeichnet, daß das genannte Motororgan ein hydraulischer, pneumatischer oder elektrischer Arbeitszylinder ist.

4. Anordnung nach Anspruch 1 bis 3, dadurch gekennzeichnet, daß das genannte Rückstellmittel eine Schraubenfeder (7) ist.

5. Anordnung nach Anspruch 3, dadurch gekennzeichnet, daß das genannte Rückstellmittel ein Arbeitszylinder ist, der im Gegentakt mit dem genannten hydraulischen, pneumatischen oder elektrischen Arbeitszylinder (10) arbeitet.

6. Anordnung nach einem der Ansprüche 1 bis 5, dadurch gekennzeichnet, daß ein Flaschenzug (12) zwischen das Motororgan (9, 10) und das entsprechende Ende der Kette oder des Gurts (6, 6', 6'') geschaltet ist.

7. Anordnung nach einem der Ansprüche 1 bis 6, dadurch gekennzeichnet, daß sie einer oder mehreren anderen Anordnung(en) nach einem der genannten Ansprüche zugeordnet ist, parallel an dieselbe Welle (2) angekoppelt und deren jeweilige Motororgane (10, 10') zeitversetzt betätigt werden derart, daß am Ende des von einer/m der Ketten oder Gurte (6, 6') auf die Welle (2) ausgeübten Zuges der Antrieb der Welle unterbrechungsfrei durch den Zug fortgesetzt wird, der von der/m anderen oder einer/m der anderen Ketten oder Gurte ausgeübt wird.

8. Anordnung nach einem der Ansprüche 1 bis 7, dadurch gekennzeichnet, daß sie zusätzlich eine dem Zahnrad (1, 1', 1'') oder der angetriebenen Welle (2) zugeordnete Rücklaufsperre (11) umfaßt.


**Claims**

1. Drive arrangement by converting a linear movement into a rotational movement comprising a toothed wheel (1, 1', 1'') integral with an axle or shaft (2) for rotary drive and journalled in a bearing carried by a supporting structure (4), a chain or belt (6, 6''), or the like, engaging said wheel and fixed, at one end, to a driving member (9, 10) which moves to-and-fro following a rectilinear path along an axis substantially tangential to the toothed wheel and, at the other end, to automatic return means (7), characterised in that the teeth (5, 5''a) of the wheel are shaped such that, in the direction of return of the chain or belt, the latter "jumps" over said teeth without driving them, whereas, in the reverse direction, the chain or belt is in firm hold with the teeth of the wheel.

2. Arrangement according to claim 1, characterised in that the teeth of the toothed wheel (1, 1', 1'') have an asymmetcic section, the escape edge (5b, 5''b) of the chain or belt (6) having a regular slope approximately tangential to the wheel and extending over an angular sector ($\alpha$) clearly greater than that ($\beta$) of the engagement edge (5a, 5''a).

3. Arcangement according to claim 1 or 2, characterised in that said driving member is a hydraulic, pneumatic or electric jack (10).

4. Arrangement accocding to claim 1 to 3, charactecised in that said return means is a coil spring (7).

5. Arrangement according to claim 3, characterised in that said return means is a jack acting in opposition to said hydraulic, pneumatic or electric jack (10).

6. Arrangement according to any one of claims 1 to 5 caracterised in that a block and tackle assembly (12) is interposed between the driving member (9, 10) and the corresponding end of the chain or belt (6, 6', 6'').

7. Arrangement according to any one of claims 1 to 6, characterised in that it is associated with one or more other arrangements according to one of said claims, coupled in parallel to the same shaft (2) and of which the respective driving members (10, 10') are operated with a shift in time, so that at the end of the force on the shaft (2) exerted by one of the chains or belts (6, 6'), the drive of the shaft is continued without stop by the fore exerted by the other, or one of the other chains or belts.

8. Arrangement according to any one of claims 1 to 7, characterised in that it further comprises an anti-return arrangement (11) associated with the toothed wheel (1, 1', 1'') or with the driven shaft (2).

_FIG_1_

0 134 746

FIG. 2

FIG _ 3 _